# EUROPÄISCHE PATENTSCHRIFT

(11) **EP 3 264 811 B1**
(45) Veröffentlichungstag und Bekanntmachung des Hinweises auf die Patenterteilung: **17.03.2021**
(21) Anmeldenummer: 16177553.1
(22) Anmeldetag: 01.07.2016
(51) Int. Cl.: H04W 8/12, H04W 48/18, H04W 92/02

(54) **VORRICHTUNGEN UND VERFAHREN ZUM BETREIBEN EINES MOBILFUNKNETZWERKS MIT MEHREREN LOGISCHEN SUBNETZWERKEN**
DEVICES AND METHOD FOR OPERATING A MOBILE RADIO NETWORK COMPRISING MULTIPLE LOGICAL SUBNETWORKS
DISPOSITIFS ET PROCEDES DE FONCTIONNEMENT D'UN RESEAU DE COMMUNICATION MOBILE COMPRENANT DES SOUS-RÉSEAUX LOGIQUES

(43) Veröffentlichungstag der Anmeldung: 03.01.2018
(73) Patentinhaber: Deutsche Telekom AG, 53113 Bonn (DE)
(72) Erfinder: Michel, Uwe, 53639 Königswinter (DE); Rass, Jörg, 50859 Köln (DE); Kerndlmaier, Walter, 53639 Königswinter (DE); Janssen, Uwe, 53347 Alfter (DE)
(74) Vertreter: Braun-Dullaeus Pannen Emmerling Patent- & Rechtsanwaltspartnerschaft mbB

(56) Entgegenhaltungen:
- US-A1- 2004 067 735
- DEUTSCHE TELEKOM: "SA WG2 Meeting #112; S2-153954; Key issue: 3GPP architecture impacts to support network slicing roaming", 3GPP DRAFT; S2-153934_NETWORK_SLICING_ROAMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. SA WG2, Nr. Anaheim, USA; 20151116 - 20151120 16. November 2015 (2015-11-16), XP051041140, Gefunden im Internet: URL:http://www.3gpp.org/ftp/Meetings_3GPP_ SYNC/SA2/Docs/ [gefunden am 2015-11-16]
- ONF: "TR-526 Applying SDN Architecture to 5G Slicing", 3GPP DRAFT; APPLYING_SDN_ARCHITECTURE_TO_5G_SLICING_TR -526, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 12. Juni 2016 (2016-06-12), XP051110516, Gefunden im Internet: URL:http://www.3gpp.org/ftp/Meetings_3GPP_ SYNC/tsg_sa/SA/Docs/ [gefunden am 2016-06-12]
- 3GPP TR 22.891 V14.1.0 (2016-06): "3GPP TR 22.891 V14.1.0 (2016-06); 3 Generation Partnership Project; Technical Specification Group Services and System Aspects; Feasibility Study on New Services and Markets Technology Enablers; Stage 1 (Release 14)", 3GPP STANDARD; 3GPP TR 22.891, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG1, Nr. V14.1.0, 24. Juni 2016 (2016-06-24), Seiten 1-95, XP051123367, [gefunden am 2016-06-24]
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 8 June 2016 (2016-06-08), pages 1-179, XP051123271, [retrieved on 2016-06-08]

## Beschreibung

Die Erfindung betrifft Vorrichtungen und Verfahren zum Betreiben eines Kommunikationsnetzwerks, insbesondere eines 5G-Kommunikationsnetzwerks.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (IoT), spezielle Fähigkeiten wie z.B. geringerer Laufzeit, welche über das hinausgehen, was 4G Kommunikationsnetze leisten können. Dabei wird 5G als ein Ende-zu-Ende System betrachtet, das sämtliche Netzwerkaspekte beinhaltet, und zwar mit einem Design, das einen hohen Grad an Konvergenz ermöglicht. 5G wird die heutigen Zugangsmechanismen und deren mögliche Weiterentwicklungen vollständig nutzen, einschließlich der heutigen Festnetzzugangstechnologien sowie vieler anderer noch zu entwickelnder Zugangstechnologien.

5G wird in einer stark heterogenen Umgebung operieren, d.h. mit mehreren Typen von Zugangstechnologien, mehrschichtigen Netzwerken, vielfältigen Typen von Kommunikationsgeräten und Nutzerinteraktionen und dergleichen. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Bereichen. In solch einer Umgebung gibt es ein fundamentales Verlangen nach 5G, um ein nahtloses und konsistentes Nutzererlebnis über Zeit und Raum zu erfüllen. Für den Betreiber eines 5G-Kommunikationsnetzwerkes besteht die Notwendigkeit, die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis danach, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich zu erreichen, und zum anderen aber auch die Flexibilität im Betrieb des Kommunikationsnetzwerkes zu erhöhen sowie maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

Eine der wichtigsten Funktionen, die Mobilfunknetze bereitstellen müssen, ist das Roaming, d.h. einem Mobilfunknetz-Teilnehmer zu ermöglichen, in einem anderen Netzwerk als seinem Heimnetzwerk selbsttätig Anrufe zu empfangen oder zu tätigen, Daten zu verschicken und zu empfangen oder Zugriff auf andere Mobilfunknetzdienste zu haben. Das heutige Roaming ist gekennzeichnet durch eine weitgehende Funktionsgleichheit des Heimnetzes (auch als HPLMN bezeichnet) und des besuchten Netzes (auch als VPLMN bezeichnet). Der Teilnehmer findet im VPLMN also weitgehend die gleiche Umgebung vor wie im Heimnetzwerk. Unterstützend hierzu werden zwar Teilnehmerdaten vom HPLMN ins VPLMN übermittelt, diese jedoch artgleich verwendet wie im HPLMN (z.B. zum Zwecke der Autorisierung).

Bei 5G-Mobilfunkkommunikationsnetzwerken besteht das Problem, dass mit der Einführung von HPLMN-spezifischen Netzwerk-Slices nicht mehr davon ausgegangen werden kann, dass diese Slices per se im VPLMN vorhanden sind. Es müssen nunmehr zunächst die Funktionen, die in der jeweiligen Netzwerk-Slice des HPLMN vorhanden sind, in das VPLMN exportiert werden, was sehr aufwändig ist.

Die Veröffentlichungen "DEUTSCHE TELEKOM, "SA WG2 Meeting #112; S2-153954; Key issue: 3GPP architecture impacts to support network slicing roaming", vol. SA WG2, no. Anaheim, USA; 20151116 - 20151120, (20151116), 3GPP DRAFT; S2-153934_NETWORK_SLICING_ROAMING, 3RD GENERATION PARTNERSHIP PROJECT (3GPP", und "ONF, "TR-526 Applying SDN Architecture to 5G Slicing", (20160612), 3GPP DRAFT; APPLYING_SDN_ARCHITECTURE_TO_5G_SUCING_TR-526, 3RD GENERATION PARTNERSHIP PROJECT (3GPP)", und "3GPP TR 22.891 V14.1.0 (2016-06), "3GPP TR 22.891 V14.1.0 (2016-06); 3 Generation Partnership Project; Technical Specification Group Services and System Aspects; Feasibility Study on New Services and Markets Technology Enablers; Stage 1 (Release 14)", und "3rd generation Partnership Project; Technical Specification Group Services and System Aspects; Study on Architecture for next generation System (Release 14)", 3GPP Standard; 3GPP TR23.799, 3RD GENERATION PARTNERSHIP PROJECT (3GPP)" betreffen Beiträge im Rahmen einer Standardisierung und beschreiben Roaming im Kontext von Netzwerk-Slices.

Die Druckschrift US2004067735 A1 beschreibt ein Verfahren zur Auswahl eines geeigneten MSC in einem GSM-Netzwerk. Das HLR Welt ein geeignetes MSC auf der Grundlage eines Userprofils.

Es ist daher die Aufgabe der vorliegenden Erfindung, ein Konzept zu schaffen, um die Leistungsfähigkeit und Flexibilität der Kommunikation zu steigern, insbesondere in 5G-Mobilfunknetzwerken bezüglich der oben genannten Anforderungen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können auf verschiedene Arten und Weisen implementiert sein. Die einzelnen beschriebenen Elemente können durch Hardware- oder Softwarekomponenten realisiert sein, beispielsweise elektronische Komponenten, die durch verschiedene Technologien hergestellt werden können und zum

Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

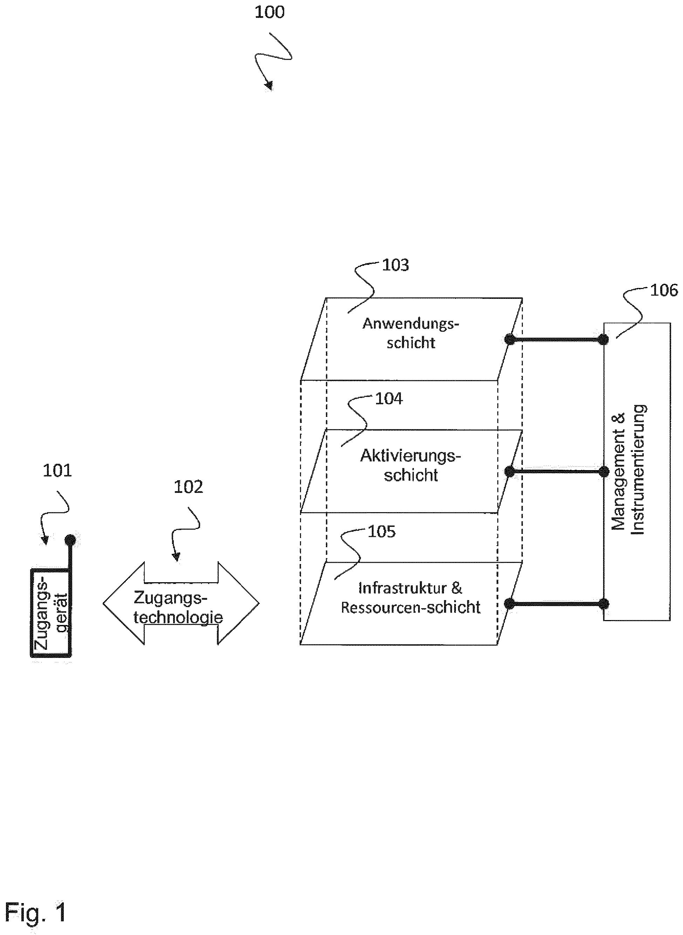

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G-Systemarchitektur. Figur 1 zeigt eine schematische Darstellung einer solchen 5G-Systemarchitektur 100. Die 5G-Systemarchitektur 100 umfasst einen Bereich mit 5G-Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G-Geräten wie z.B. Mobiltelefonen, tragbaren Geräten, Maschinenkommunikationsmodulen und dergleichen. 5G-Geräte können vielfältige und konfigurierbare Fähigkeiten aufweisen und beispielsweise als Relay oder Hub agieren oder abhängig von dem jeweiligen Kontext als Computer/Speicher-Ressource arbeiten. Diese Ressourcen werden den höheren Schichten 104, 103 und der Management- & Instrumentierungsebene 106 über entsprechende APIs (Anwendungsprogrammier-Schnittstellen) zur Verfügung gestellt. Das Überwachen der Leistungsfähigkeit und der Konfigurationen können inhärenter Teil solcher APIs sein.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, sowie einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden, und zwar durch Nutzung der dafür vorgesehenen APIs. Für bestimmte Funktionen können mehrfache Varianten existieren, z.B. verschiedene Implementierungen derselben Funktionalität, welche unterschiedliche Leistungsfähigkeiten oder Charakteristiken haben. Die verschiedenen Grade der Leistungsfähigkeit und der angebotenen Fähigkeiten können dazu verwendet werden, um die Netzwerkfunktionalitäten wesentlich weiter zu unterscheiden, als es in heutigen Netzen möglich ist, beispielsweise als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, von Unternehmen, vertikalen Operatoren oder von Drittparteien, die das 5G-Netzwerk nutzen. Die Schnittstelle zu der Management- & Instrumentierungsebene 106 erlaubt zum Beispiel, bestimmte, d.h. dedizierte Netzwerk-Slices für eine Anwendung aufzubauen, oder eine Anwendung einer existierenden Netzwerk-Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk-Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet ferner sowohl die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk-Slices zu erzeugen und zu verwalten. Aufgrund der vielzähligen Aufgaben der Management- & Instrumentierungsebene 106 handelt es sich dabei in der Regel nicht um einen monolithischen Block von Funktionalität, sondern vielmehr um eine Sammlung modularer Funktionen, die Fortschritte integrieren, die in verschiedenen Netzwerkdomänen erzielt werden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und Dienstbereitstellung zu optimieren.

Die hier vorgestellten Geräte, Systeme und Verfahren sind dazu vorgesehen, die Kommunikation in Kommunikationsnetzen zu verbessern, insbesondere in 5G-Kommunikationsnetzen mit mehreren Netzwerk-Slices, wie im Folgenden beschrieben.

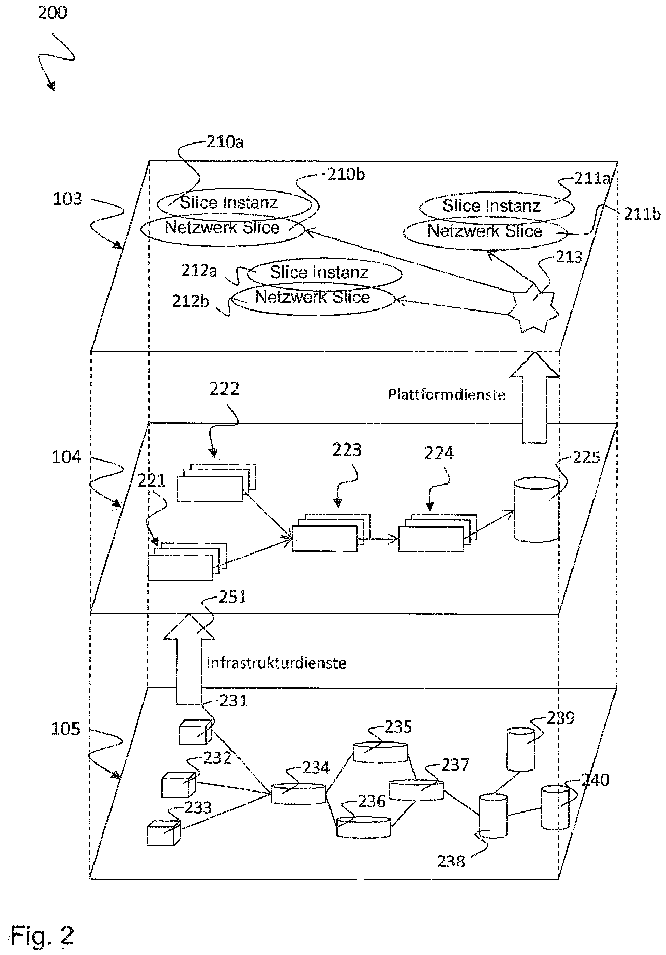

Figur 2 zeigt eine schematische Darstellung eines 5G-Kommunikationsnetzwerks 200 mit mehreren Netzwerk-Slices. Das 5G-Kommunikationsnetzwerk 200 umfasst eine Infrastruktur- & Ressourcenschicht 105, eine Aktivierungsschicht 104 und eine Anwendungsschicht 103.

Die Infrastruktur- & Ressourcenschicht 105 umfasst die gesamte physikalische Infrastruktur, die einem Netzwerkbetreiber zugeordnet ist, d.h. Standorte, Kabel, Netzwerkknoten und dergleichen. Diese Schicht 105 bildet die Grundlage für alle Netzwerk-Slices. Sie ist so generisch wie möglich aufgebaut, um die Zahl der spezialisierten physikalischen Einheiten auf ein Mindestmaß zu beschränken. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Softwareobjekten hinzu, um das Erzeugen von jeder Art von Netzwerk-Slices zu ermöglichen und so eine Plattform als Dienst der nächsthöheren Schicht 103 bereitzustellen.

Softwareobjekte können in jeder Granularität vorliegen, und ein winziges oder ein sehr großes Fragment einer Netzwerk-Slice umfassen. Um die Erzeugung von Netzwerk-Slices auf einem geeigneten Abstraktionslevel zu erlauben, können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekte 224 überführt werden können und in einer Objektbibliothek 225 der nächsthöheren Ebene zur Verfügung gestellt werden. Damit kann die Komplexität hinter den Netzwerk-Slices verborgen werden. Beispielsweise kann ein Nutzer bzw. Kunde eine mobile Breitband-Slice erzeugen und dabei lediglich KPIs (Key Performance Indikatoren) definieren, ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einer Netzwerk-Slice unterstützt, z.B. durch Verwendung von SFC ("Service Function Chaining" = Dienstfunktionenverkettung) oder modifizierender Software, so dass die Funktionalität einer Slice vollständig vordefiniert werden kann und sowohl näherungsweise statische Softwaremodule als auch dynamisch hinzufügbare Softwaremodule umfassen kann.

Eine Netzwerk-Slice kann dabei als software-definierte Entität betrachtet werden, die auf einem Satz von Objekten basiert, welche ein vollständiges Netzwerk definieren. Die Aktivierungsschicht 104 spielt für dieses Konzept eine Schlüsselrolle, da sie alle Softwareobjekte umfassen kann, die notwendig sind, um die Netzwerk-Slice und die entsprechenden Fertigkeiten zum Handhaben der Objekte bereitzustellen. Die Aktivierungsschicht 104 kann als eine Art von Netzwerk-Betriebssystem betrachtet werden, komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk-Slices auszugestalten, während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln einer Netzwerk-Slice-Umgebung.

Eine Netzwerk-Slice, auch als 5G-Slice bezeichnet, unterstützt die Kommunikationsdienste eines bestimmten Verbindungstyps mit einer bestimmten Art der Handhabung der C- (Control bzw. Steuerungs-) und U-(User Data bzw. Nutzerdaten) Schicht, auch als "Control Plane" und "User Plane" bezeichnet. Eine 5G-Slice setzt sich zusammen aus einer Sammlung von verschiedenen 5G-Netzwerkfunktionen und spezifischen Funkzugangstechnologie-Einstellungen (RAT = radio access technology), die für den spezifischen Anwendungsfall miteinander kombiniert werden. Daher kann eine 5G-Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie sowie eine Konfiguration der 5G-Geräte. Nicht alle Slices enthalten dieselben Funktionen, einige Funktionen, die heute für ein mobiles Netzwerk als wesentlich erscheinen, können sogar in einigen Slices nicht vorkommen. Die Intention einer 5G-Slice ist es, nur die Funktionen bereitzustellen, die für den spezifischen Anwendungsfall notwendig sind, und alle anderen unnötigen Funktionalitäten zu vermeiden. Die Flexibilität hinter dem Slice-Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte von Slices über geeignete APIs zu steuern, um so maßgeschneiderte Dienste bereitstellen zu können.

Die Anwendungsschicht 103 umfasst alle erzeugten Netzwerk-Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk-Slices 210b, 211b, 212b für verschiedene Anwender, beispielsweise als eine neue Netzwerk-Slice-Instanz 210a, 211a, 212a. Beispielsweise kann eine Netzwerk-Slice 210b, 211b, 212b, welche beispielsweise einer Automotive-Anwendung zugeordnet ist, auch für verschiedene andere industrielle Anwendungen genutzt werden. Die Slice-Instanzen 210a, 211a, 212a, die von einem ersten Anwender erzeugt wurden, können beispielsweise unabhängig von den Slice-Instanzen sein, die von einem zweiten Anwender erzeugt wurden, und das obwohl die gesamte Netzwerk-Slice-Funktionalität dieselbe sein kann.

Vor diesem Hintergrund betrifft die Erfindung gemäß einem ersten Aspekt ein Verfahren zum Betreiben eines Mobilfunknetzwerkes. Dabei umfasst das Verfahren das Bereitstellen eines ersten logischen Subnetzwerkes, insbesondere einer ersten Netzwerk-Slice, des Mobilfunknetzwerkes, um einem mobilen Kommunikationsgerät mit einer Subskription für das Mobilfunknetzwerk die Kommunikation über das erste logische Subnetzwerk des Mobilfunknetzwerkes zu ermöglichen, und das Bereitstellen eines zweiten logischen Subnetzwerkes, insbesondere einer zweiten Netzwerk-Slice, des Mobilfunknetzwerkes, um einem roamenden mobilen Kommunikationsgerät mit einer Subskription für ein anderes Mobilfunknetzwerk die Kommunikation über das zweite logische Subnetzwerk des Mobilfunknetzwerkes zu ermöglichen. Aus der Sicht des roamenden mobilen Kommunikationsgeräts handelt es sich bei dem Mobilfunknetzwerk um ein VPLMN und bei dem anderen Mobilfunknetzwerk um ein HPLMN. Ein Vorteil der Erfindung besteht insbesondere darin, dass durch die Bereitstellung der zweiten Netzwerk-Slice benutzerspezifische, nicht-standardisierte Funktionen des HPLMN auch im VPLMN zur Ausführung kommen können. Dies ist insbesondere für latenzkritische Anwendungen vorteilhaft, bei denen ein Rerouting des Verkehrs in das HPLMN aus Zeitgründen ausgeschlossen ist.

In einer Ausführungsform des Verfahrens gemäß dem ersten Aspekt der Erfindung erfolgt der Schritt des Bereitstellens des zweiten Subnetzwerkes des Mobilfunknetzwerkes ansprechend auf einen Schritt des Einbuchens des roamenden mobilen Kommunikationsgeräts in das Mobilfunknetzwerk, insbesondere in das erste logische Subnetzwerk des Mobilfunknetzwerkes.

In einer Ausführungsform des Verfahrens gemäß dem ersten Aspekt der Erfindung umfasst das Verfahren ferner den Schritt, das erste logische Subnetzwerk und das zweite logische Subnetzwerk parallel zu betreiben. Eine solche Ausführungsform erlaubt ein rasches Umschalten zwischen dem ersten logischen Subnetzwerk und dem zweiten logischen Subnetzwerk.

In einer Ausführungsform des Verfahrens gemäß dem ersten Aspekt der Erfindung kann eine Basisstation Teil des ersten logischen Subnetzwerkes und Teil des zweiten logischen Subnetzwerkes sein, wobei die Basisstation ausgebildet ist, als Teil des ersten logischen Subnetzwerkes auf der Grundlage einer ersten Radiozugangstechnologie mit einem mobilen Kommunikationsgerät zu kommunizieren und als Teil des zweiten logischen Subnetzwerkes auf der Grundlage einer zweiten Radiozugangstechnologie mit dem roamenden mobilen Kommunikationsgerät zu kommunizieren.

In einer Ausführungsform des Verfahrens gemäß dem ersten Aspekt der Erfindung bildet das zweite logische Subnetzwerk des Mobilfunknetzwerkes zumindest einige Funktionen des anderen Mobilfunknetzwerkes nach.

Erfindungsgemäß umfasst das Verfahrens gemäß dem ersten Aspekt der Erfindung ferner den Schritt des Bereitstellens von Instanziierungssoftware von dem anderen Mobilfunknetzwerk über eine Schnittstelle an das Mobilfunknetzwerk, wobei die Instanziierungssoftware dazu ausgebildet ist, das zweite logische Subnetzwerk auf dem Mobilfunknetzwerk bereitzustellen.

In einer Ausführungsform des Verfahrens gemäß dem ersten Aspekt der Erfindung erfolgt der Schritt des Bereitstellens der Instanziierungssoftware ansprechend auf einen Schritt des Einbuchens des roamenden mobilen Kommunikationsgeräts in das Mobilfunknetzwerk, insbesondere in das erste logische Subnetzwerk des Mobilfunknetzwerkes, oder in Form eines einmaligen Einrichtungsprozesses oder in Form eines sich wiederholenden Aktualisierungsprozesses.

Erfindungsgemäß umfasst das Verfahrens gemäß dem ersten Aspekt der Erfindung das Bereitstellen des zweiten logischen Subnetzwerkes des Mobilfunknetzwerkes das Auswählen des zweiten logischen Subnetzwerkes des Mobilfunknetzwerkes aus einer Vielzahl von zweiten logischen Subnetzwerken des Mobilfunknetzwerkes.

In einer Ausführungsform des Verfahrens gemäß dem ersten Aspekt der Erfindung basiert das Auswählen des zweiten logischen Subnetzwerkes des Mobilfunknetzwerkes aus einer Vielzahl von zweiten logischen Subnetzwerken des Mobilfunknetzwerkes auf einem Teilnehmerprofil, das mit dem roamenden mobilen Kommunikationsgerät verknüpft ist.

In einer Ausführungsform des Verfahrens gemäß dem ersten Aspekt der Erfindung umfasst das Verfahren den weiteren Schritt, dass das mit dem roamenden mobilen Kommunikationsgerät verknüpfte Teilnehmerprofil dem Mobilfunknetzwerk von dem anderen Mobilfunknetzwerk bereitgestellt wird.

In einer Ausführungsform des Verfahrens gemäß dem ersten Aspekt der Erfindung erfolgt das Bereitstellen des mit dem roamenden mobilen Kommunikationsgerät verknüpften Teilnehmerprofils ansprechend auf einen Schritt des Einbuchens des roamenden mobilen Kommunikationsgeräts in das Mobilfunknetzwerk, insbesondere in das erste logische Subnetzwerk des Mobilfunknetzwerkes, und einen Schritt des Übertragens einer eindeutigen Teilnehmerkennung, insbesondere einer IMSI, von dem Mobilfunknetzwerk an das andere Mobilfunknetzwerk.

Gemäß einem zweiten Aspekt betrifft die Erfindung eine Netzwerkmanagemententität, insbesondere einen SDN-Orchestrator, zum Betreiben von logischen Subnetzwerken eines Mobilfunknetzwerkes, wobei die Netzwerkverwaltungsentität ausgebildet ist, ein erstes logisches Subnetzwerk des Mobilfunknetzwerkes bereitzustellen, um einem mobilen Kommunikationsgerät mit einer Subskription für das Mobilfunknetzwerk die Kommunikation über das erste logische Subnetzwerk des Mobilfunknetzwerkes zu ermöglichen, und ein zweites logisches Subnetzwerk des Mobilfunknetzwerkes bereitzustellen, um einem roamenden mobilen Kommunikationsgerät mit einer Subskription für ein anderes Mobilfunknetzwerk die Kommunikation über das zweite logische Subnetzwerk des Mobilfunknetzwerkes zu ermöglichen.

In einer Ausführungsform der Netzwerkmanagemententität gemäß dem zweiten Aspekt der Erfindung ist die Netzwerkmanagemententität ferner ausgebildet, das zweite Subnetzwerk des Mobilfunknetzwerkes ansprechend auf ein Einbuchens des roamenden mobilen Kommunikationsgeräts in das Mobilfunknetzwerk, insbesondere in das erste logische Subnetzwerk des Mobilfunknetzwerkes bereitzustellen.

In einer Ausführungsform der Netzwerkmanagemententität gemäß dem zweiten Aspekt der Erfindung bildet das zweite logische Subnetzwerk des Mobilfunknetzwerkes zumindest einige Funktionen des anderen Mobilfunknetzwerkes nach.

Weitere Ausführungsformen der Netzwerkmanagemententität gemäß dem zweiten Aspekt der Erfindung ergeben sich aus den vorstehenden Ausführungsformen des Verfahrens gemäß dem ersten Aspekt der Erfindung.

Weitere Ausführungsbeispiele werden Bezug nehmend auf die beiliegenden Zeichnungen erläutert. Es zeigen:
- Fig. 1: eine schematische Darstellung der Architektur eines 5G-Kommunikationsnetzwerkes;
- Fig. 2: eine schematische Darstellung eines 5G-Kommunikationsnetzwerks mit mehreren Netzwerk-Slices;
- Fig. 3: eine schematische Darstellung eines 5G-Kommunikationsnetzwerks mit einem HPLMN und einem VPLMN mit mehreren Netzwerk-Slices gemäß einer Ausführungsform der Erfindung; und
- Fig. 4: eine schematische Darstellung eines Verfahrens gemäß einer Ausführungsform, das in dem 5G-Kommunikationsnetzwerk von Figur 3 implementiert ist.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Merkmale verzichtet.

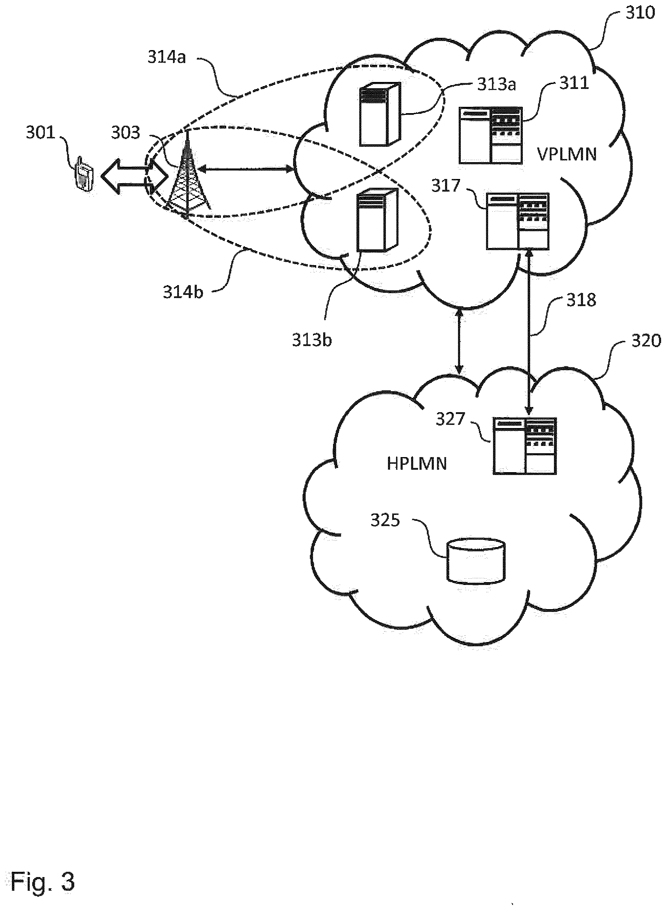

Figur 3 zeigt eine schematische Darstellung eines 5G-Kommunikationssystems mit einem ersten Mobilfunknetzwerk 310 und einem zweiten Mobilfunknetzwerk 320, wobei das erste Mobilfunknetzwerk 310 mehrere logische Subnetzwerke in Form von Netzwerk-Slices 314a, 314b aufweist. Bei dem ersten Mobilfunknetzwerk 310 und dem zweiten Mobilfunknetzwerk 320 kann es sich beispielsweise um Mobilfunknetzwerke unterschiedlicher Betreiber in unterschiedlichen Ländern handeln.

Der Begriff "Netzwerk-Slice" bzw. "Netzwerk-Slicing" betrifft ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt eine Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

Bei der in Figur 3 dargestellten Ausführungsform besitzt das mobile Kommunikationsgerät 301 eine Subskription für das zweite Mobilfunknetzwerk 320, jedoch keine Subskription für das erste Mobilfunknetzwerk 310. Aus der Sicht des mobilen Kommunikationsgeräts 301 handelt es sich bei dem ersten Mobilfunknetzwerk 310 um ein VPLMN (visited public land mobile network) und bei dem zweite Mobilfunknetzwerk 320 um ein HPLMN (home public land mobile network) oder Heimnetzwerk 320. Aus der Sicht des ersten Mobilfunknetzwerks 310 handelt es sich bei dem mobilen Kommunikationsgeräts 301 um ein roamendes mobiles Kommunikationsgerät 301.

Gemäß einer Ausführungsform wird beim Einbuchen des roamenden mobilen Kommunikationsgeräts 301, beispielsweise eines Mobiltelefons 301, in das VPLMN 310 der Einbuchungsvorgang zunächst von einer ersten Default-Netzwerk-Slice 314a bearbeitet, die z.B. auf wenigstens einem Server 313a des VPLMN 310 instanziiert ist. Eine andere Möglichkeit besteht darin, dass das roamende mobile Kommunikationsgerät 301 unmittelbar eine Umgebung vorfindet, die dem Heimnetzwerk 320 des roamenden mobilen Kommunikationsgeräts 301entspricht oder zumindest einige Funktionen dieses Heimnetzwerkes 320 nachbildet. Dies kann etwa dadurch geschehen, dass eine ins VPLMN 310 geladene Instanziierungssoftware ein neues Radio-Interface generiert (abgestrahlt durch die Antenne einer Basisstation 303), welches das roamende mobile Kommunikationsgerät 301 unmittelbar nutzen kann. Da eine Netzwerk-Slice einen kompletten Ende-zu-Ende-Charakter haben kann, kann insofern das roamende mobile Kommunikationsgerät 301 beim Einbuchen in das VPLMN 310 bereits implizit die notwendige Auswahl der Netzwerk-Slice treffen. Dabei kann die in das VPLMN 310 zu ladende Instanziierungssoftware auf einem einzelnen Server 313a des VPLMN 310 oder auf mehreren Servern verteilt zur Ausführung kommen. Dabei dient ein SDN-Controller 311 zum Bereitstellen der in einer jeweiligen Netzwerk-Slice 314a, 314b notwendigen Vernetzung, insbesondere zum Weiterleiten von Datenpaketen in den Netzwerk-Slices 314a, 314b auf der Basis von Switches.

Die Bearbeitung des Einbuchens des roamenden mobilen Kommunikationsgeräts 301 wird an die weitere Netzwerk-Slice 314b übergeben, die beispielsweise auf wenigstens einem weiteren Server 313b des VPLMN 310 instanziiert sein kann, wenn das roamende mobile Kommunikationsgerät 301 zu erkennen gibt, welche Netzwerk-Slice 314a, 314b genutzt werden soll. Alternativ kann eine Übergabe an die weitere Netzwerk-Slice 314b durch hierzu vom HPLMN 320 an das VPLMN 310 übermittelte Daten veranlasst werden, beispielsweise in Form eines Teilnehmerprofils, das dem VPLMN 310 von einem Heimbenutzerverzeichnis 325 des HPLMN 320 in Reaktion auf das Einbuchen des roamenden mobilen Kommunikationsgeräts 301 und das Übermitteln einer eindeutigen Teilnehmerkennung insbesondere einer IMSI, an das HPLMN 320 zur Verfügung gestellt worden ist. Bei einer solchen Ausführungsform kann mittels des Teilnehmerprofils eine von mehreren möglichen Netzwerk-Slices identifiziert bzw. ausgewählt werden, die gegenüber dem roamenden mobilen Kommunikationsgerät 301 als dem Heimnetzwerk 320 artgleiche oder zumindest teilweise funktionsgleiche Netzwerke dienen können.

Gemäß einer Ausführungsform stellt die Netzwerk-Slice 314b zumindest einen Teil der Funktionalität bereit, die das roamende mobile Kommunikationsgerät 301 beim Einbuchen in sein Heimnetzwerk 320 vorfindet. Mit anderen Worten: vorzugsweise ist die Netzwerk-Slice 314b soweit wie möglich funktionsgleich zu der Netzwerk-Slice ausgebildet, mit der das in Figur 3 roamende mobile Kommunikationsgerät 301 beim Einbuchen in sein Heimnetzwerk 320 interagiert.

Wie bereits vorstehend beschrieben, kann die Netzwerk-Slice 314b auf einer Instanziierungssoftware basieren, die dem VPLMN 310 vom HPLMN 320 zur Verfügung gestellt wird bzw. worden ist. Diese Software kann eine komplette Slice oder nur einen Teil einer Slice des HPLMN 320 nachbilden, während der Rest der Slice (bestimmte Funktionalitäten) von einer komplementären Slice des VPLMN 310 bereitgestellt wird.

Zur Bereitstellung der Instanziierungssoftware kann eine entsprechende Management-Schnittstelle 318 zwischen dem VPLMN 310 und dem HPLMN 320 vorgesehen sein, und zwar insbesondere zwischen einem SDN-Orchestrator 317 des VPLMN 310 und einem SDN-Orchestrator 327 des HPLMN 320. Dabei ist die Management-Schnittstelle 318 derart ausgebildet, dass die über die Management-Schnittstelle 318 an den SDN-Orchestrator 317 übergegebene Instanziierungssoftware auf dem VPLMN 310 zur Ausführung gebracht werden kann, beispielsweise auf dem Server 313a, dem Server 313b und/oder der SDN-Orchestrator 317 selbst, um eine entsprechende Slice auf dem VPLMN 310 zu instanziieren. Der SDN-Orchestrator 317 des VPLMN 310 kann als Netzwerkmanagemententität dazu ausgebildet sein, die Netzwerk-Slices 314a, 314b zu instanziieren und zu verwalten. In Ausführungsformen der Erfindung kann der SDN-Orchestrator 317 des VPLMN 310 ausgebildet sein, nach einem Einbuchen des roamenden mobilen Kommunikationsgerät 301 in die Default-Netzwerk-Slice 314a das roamende mobile Kommunikationsgerät 301 der Netzwerk-Slice 314b zuzuordnen, welche zumindest teilweise die Funktionalität des HPLMN 320 nachbildet.

Gemäß Ausführungsformen der Erfindung kann die Bereitstellung der Instanziierungssoftware über die Management-Schnittstelle 318 dynamisch "on demand" oder aber als einmaliger Einrichtungsprozess oder sich wiederholender Aktualisierungsprozess erfolgen.

In Ausführungsformen der Erfindung kann auch die mit dem roamenden mobilen Kommunikationsgerät 301 kommunizierende Basisstation 303 Teil der Slice 314a und/oder der Slice 314b sein. Dies ermöglicht die Implementierung einer auch im HPLMN 320 implementierten speziellen Radioschnittstelle zwischen dem roamenden mobilen Kommunikationsgerät 301 und der Basisstation 303, also eine durch Software definierte Radioschnittstelle ("software defined radio").

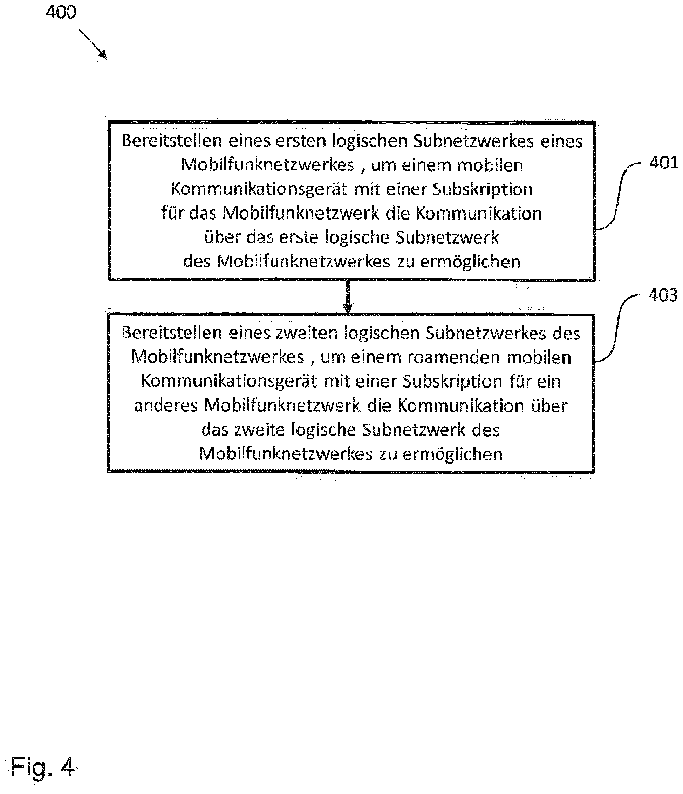

Figur 4 zeigt eine schematische Darstellung eines Verfahrens 400 zum Betreiben des Mobilfunknetzwerkes 310 von Figur 3. Das Verfahren 400 umfasst einen Schritt 401 des Bereitstellen des ersten logischen Subnetzwerkes 314a des Mobilfunknetzwerkes 310, um einem mobilen Kommunikationsgerät mit einer Subskription für das Mobilfunknetzwerk 310 die Kommunikation über das erste logische Subnetzwerk 314a des Mobilfunknetzwerkes 310 zu ermöglichen, und einen Schritt 403 des Bereitstellens eines zweiten logischen Subnetzwerkes 314b des Mobilfunknetzwerkes 310, um dem roamenden mobilen Kommunikationsgerät 301 mit einer Subskription für das Mobilfunknetzwerk 320 die Kommunikation über das zweite logische Subnetzwerk 314b des Mobilfunknetzwerkes 310 zu ermöglichen.

Ein maßgeblicher Vorteil von Ausführungsformen der Erfindung besteht darin, dass benutzerspezifische, nicht-standardisierte Funktionen des HPLMN 320 auch im VPLMN 310 zur Ausführung kommen können. Dies ist insbesondere für latenzkritische Anwendungen vorteilhaft, bei denen ein Rerouting des Verkehrs in das HPLMN 320 aus Zeitgründen ausgeschlossen ist.

## Patentansprüche

1. Verfahren (400) zum Betreiben eines Mobilfunknetzwerkes (310), wobei eine Netzwerkmanagemententität (317) eine erste Netzwerk-Slice (314a) des Mobilfunknetzwerkes (310) bereitstellt (401), um einem mobilen Kommunikationsgerät mit einer Subskription für das Mobilfunknetzwerk (310) eine Kommunikation über die erste Netzwerk-Slice (314a) des Mobilfunknetzwerkes (310) zu ermöglichen;
dadurch gezeichnet, dass die Netzwerkmanagemententität eine zweite Netzwerk-Slice (314b) des Mobilfunknetzwerkes (310) bereitstellt (403), um einem roamenden mobilen Kommunikationsgerät (301) mit einer Subskription für ein anderes Mobilfunknetzwerk (320) eine Kommunikation über die zweite Netzwerk-Slice (314b) des Mobilfunknetzwerkes (310) zu ermöglichen, wobei das Bereitstellen der zweiten Netzwerk-Slice (314b) des Mobilfunknetzwerkes (310) das Auswählen der zweiten Netzwerk-Slice (314b) des Mobilfunknetzwerkes (310) aus einer Vielzahl von zweiten Netzwerk-Slices des Mobilfunknetzwerkes (310) umfasst, wobei das Verfahren (400) ferner den Schritt des Bereitstellens von Instanziierungssoftware von dem anderen Mobilfunknetzwerk (320) über eine Schnittstelle (318) an die Netzwerkmanagemententität (317) umfasst und wobei die Instanziierungssoftware dazu ausgebildet ist, die zweite Netzwerk-Slice (314b) auf dem Mobilfunknetzwerk (310) bereitzustellen.

2. Verfahren (400) nach Anspruch 1, wobei der Schritt (403) des Bereitstellens der zweiten Netzwerk-Slice (314b) des Mobilfunknetzwerkes (310) ansprechend auf einen Schritt des Einbuchens des roamenden mobilen Kommunikationsgeräts (301) in das Mobilfunknetzwerk (310) erfolgt.

3. Verfahren (400) nach Anspruch 1, wobei die Netzwerkmanagemententität die erste Netzwerk-Slice (314a) und die zweite Netzwerk-Slice (314b) parallel betreibt.

4. Verfahren (400) nach einem der vorstehenden Ansprüche, wobei eine Basisstation (303) Teil der ersten Netzwerk-Slice (314a) und Teil der zweiten Netzwerk-Slice (314b) ist und wobei die Basisstation ausgebildet ist, als Teil des ersten Netzwerk-Slice (314a) auf der Grundlage einer ersten Radiozugangstechnologie mit dem mobilen Kommunikationsgerät zu kommunizieren und als Teil der zweiten Netzwerk-Slice (314b) auf der Grundlage einer zweiten Radiozugangstechnologie mit dem roamenden mobilen Kommunikationsgerät (301) zu kommunizieren.

5. Verfahren (400) nach einem der vorstehenden Ansprüche, wobei die zweite Netzwerk-Slice (314b) des Mobilfunknetzwerkes (310) zumindest einige Funktionen des anderen Mobilfunknetzwerkes (320) nachbildet.

6. Verfahren (400) nach Anspruch 5, wobei der Schritt des Bereitstellens der Instanziierungssoftware ansprechend auf einen Schritt des Einbuchens des roamenden mobilen Kommunikationsgeräts (301) in das Mobilfunknetzwerk (310), oder in Form eines einmaligen Einrichtungsprozesses oder in Form eines sich wiederholenden Aktualisierungsprozesses erfolgt.

7. Verfahren (400) nach Anspruch 1, wobei das Auswählen der zweiten Netzwerk-Slice (314b) des Mobilfunknetzwerkes (310) aus einer Vielzahl von zweiten Netzwerk-Slice des Mobilfunknetzwerkes (310) auf einem Teilnehmerprofil basiert, das mit dem roamenden mobilen Kommunikationsgerät (301) verknüpft ist.

8. Verfahren (400) nach Anspruch 7, wobei das Verfahren (400) den weiteren Schritt umfasst, dass das mit dem roamenden mobilen Kommunikationsgerät (301) verknüpfte Teilnehmerprofil dem Mobilfunknetzwerk (310) von dem anderen Mobilfunknetzwerk (320) bereitgestellt wird.

9. Verfahren (400) nach Anspruch 8, wobei das Bereitstellen des mit dem roamenden mobilen Kommunikationsgerät (301) verknüpften Teilnehmerprofils ansprechend auf einen Schritt des Einbuchens des roamenden mobilen Kommunikationsgeräts (301) in das Mobilfunknetzwerk (310), und einen Schritt des Übertragens einer eindeutigen Teilnehmerkennung, von dem Mobilfunknetzwerk (310) an das andere Mobilfunknetzwerk (320) erfolgt.

10. Netzwerkmanagemententität (317) zum Betreiben von Netzwerk-Slices eines Mobilfunknetzwerkes (310), wobei die Netzwerkmanagemententität ausgebildet ist, eine erstes Netzwerk-Slice (314a) des Mobilfunknetzwerkes (310) bereitzustellen, um einem mobilen Kommunikationsgerät mit einer Subskription für das Mobilfunknetzwerk (310) eine Kommunikation über die erste Netzwerk-Slice (314a) des Mobilfunknetzwerkes (310) zu ermöglichen,
dadurch gezeichnet, dass
die Netzwerkmanagemententität ausgebildet ist, eine zweite Netzwerk-Slice (314b) des Mobilfunknetzwerkes (310) bereitzustellen, um einem roamenden mobilen Kommunikationsgerät (301) mit einer Subskription für ein anderes Mobilfunknetzwerk (320) eine Kommunikation über die zweite Netzwerk-Slice (314b) des Mobilfunknetzwerkes (310) zu ermöglichen, wobei die Netzwerkmanagemententität ausgebildet ist,
die zweite Netzwerk-Slice (314b) des Mobilfunknetzwerkes (310) aus einer Vielzahl von zweiten Netzwerk-Slices des Mobilfunknetzwerkes (310) auszuwählen, um die zweite Netzwerk-Slice (314b) des Mobilfunknetzwerkes (310) bereitzustellen und wobei die Netzwerkmanagemententität ausgebildet ist,
über eine Schnittstelle (318) eine Instanziierungssoftware von dem anderen Mobilfunknetzwerk (320) bereitgestellt zu bekommen, wobei die Instanziierungssoftware dazu ausgebildet ist, die zweite Netzwerk-Slice (314b) auf dem Mobilfunknetzwerk (310) bereitzustellen.

11. Netzwerkmanagemententität (317) nach Anspruch 10, wobei die Netzwerkmanagemententität (317) ferner ausgebildet ist, die zweite Netzwerk-Slice (314b) des Mobilfunknetzwerkes (310) ansprechend auf ein Einbuchen des roamenden mobilen Kommunikationsgeräts (301) in das Mobilfunknetzwerk (310) bereitzustellen.

12. Netzwerkmanagemententität (317) nach Anspruch 10 oder 11, wobei die zweite Netzwerk-Slice (314b) des Mobilfunknetzwerkes (310) zumindest einige Funktionen des anderen Mobilfunknetzwerkes (320) nachbildet.

13. Netzwerkmanagemententität (317) nach einem der Ansprüche 10 bis 12, wobei die Netzwerkmanagemententität (317) als SDN-Orchestrator (317) ausgebildet ist, wobei SDN für Software Defined Networking steht.

## Claims

1. A method (400) for operating a mobile network (310), in which method a network management entity (317) provides (401) a first network slice (314a) of the mobile network (310) in order to allow a mobile communication device with a subscription to the mobile network (310) to communicate via the first network slice (314a) of the mobile network (310),
**characterised in that**
the network management entity provides (403) a second network slice (314b) of the mobile network (310) in order to allow a roaming mobile communication device (301) with a subscription to another mobile network (320) to communicate via the second network slice (314b) of the mobile network (310), wherein the provision of the second network slice (314b) of the mobile network (310) comprises the selection of the second network slice (314b) of the mobile network (310) from a multiplicity of second network slices of the mobile network (310), wherein
the method (400) further comprises the step of providing instantiation software from the other mobile network (320) via an interface (318) to the network management entity (317), and wherein the instantiation software is configured to provide the second network slice (314b) on the mobile network (310).

2. The method (400) according to Claim 1, wherein the step (403) of providing the second network slice (314b) of the mobile network (310) is carried out in response to a step of registering the roaming mobile communication device (301) on the mobile network (310).

3. The method (400) according to Claim 1, wherein the network management entity operates the first network slice (314a) and the second network slice (314b) in parallel.

4. The method (400) according to any one of the preceding claims, wherein a base station (303) is part of the first network slice (314a) and part of the second network slice (314b), and wherein the base station is configured to communicate with the mobile communication device as part of the first network slice (314a) on the basis of a first radio access technology and to communicate with the roaming mobile communication device (301) as part of the second network slice (314b) on the basis of a second radio access technology.

5. The method (400) according to any one of the preceding claims, wherein the second network slice (314b) of the mobile network (310) reproduces at least some functions of the other mobile network (320).

6. The method (400) according to Claim 5, wherein the step of providing the instantiation software is carried out in response to a step of registering the roaming mobile communication device (301) on the mobile network (310) or in the form of a one-off setup process or in the form of a repeating update process.

7. The method (400) according to Claim 1, wherein the selection of the second network slice (314b) of the mobile network (310) from a multiplicity of second network slices of the mobile network (310) is based on a subscriber profile which is linked to the roaming mobile communication device (301).

8. The method (400) according to Claim 7, wherein the method (400) comprises the further step that the subscriber profile linked to the roaming mobile communication device (301) is provided to the mobile network (310) by the other mobile network (320).

9. The method (400) according to Claim 8, wherein the provision of the subscriber profile linked to the roaming mobile communication device (301) is carried out in response to a step of registering the roaming mobile communication device (301) on the mobile network (310) and a step of transferring a unique subscriber identifier from the mobile network (310) to the other mobile network (320).

10. A network management entity (317) for operating network slices of a mobile network (310), the network management entity being configured to provide a first network slice (314a) of the mobile network (310) in order to allow a mobile communication device with a subscription to the mobile network (310) to communicate via the first network slice (314a) of the mobile network (310),
**characterised in that**
the network management entity is configured to provide a second network slice (314b) of the mobile network (310) in order to allow a roaming mobile communication device (301) with a subscription to another mobile network (320) to communicate via the second network slice (314b) of the mobile network (310), wherein the network management entity is configured to select the second network slice (314b) of the mobile network (310) from a multiplicity of second network slices of the mobile network (310) in order to provide the second network slice (314b) of the mobile network (310), and wherein the network management entity is configured to receive instantiation software from the other mobile network (320) via an interface (318), wherein the instantiation software is configured to provide the second network slice (314b) on the mobile network (310).

11. The network management entity (317) according to Claim 10, wherein the network management entity (317) is also configured to provide the second network slice (314b) of the mobile network (310) in response to a registration of the roaming mobile communication device (301) on the mobile network (310).

12. The network management entity (317) according Claim 10 or 11, wherein the second network slice (314b) of the mobile network (310) reproduces at least some functions of the other mobile network (320).

13. The network management entity (317) according to one of Claims 10 to 12, wherein the network management entity (317) is in the form of an SDN orchestrator (317), SDN standing for software-defined networking.

## Revendications

1. Procédé (400) d'exploitation d'un réseau de téléphonie mobile (310), dans lequel une entité de gestion de réseau (317) une première tranche de réseau (314a) du réseau de téléphonie mobile (310) est à disposition (401) pour permettre à un appareil de communication mobile disposant d'une souscription pour le réseau de téléphonie mobile (310) une communication par l'intermédiaire de la première tranche de réseau (314a) du réseau de téléphonie mobile (310),
**caractérisé en ce que**
l'entité de gestion du réseau met à disposition (403) une seconde tranche de réseau (314b) du réseau de téléphonie mobile (310) pour permettre à un appareil de communication mobile itinérant (301) disposant d'une souscription pour un autre réseau de téléphonie mobile (320) une communication par l'intermédiaire de la seconde tranche de réseau (314b) du réseau de téléphonie mobile (310), la mise à disposition de la seconde tranche de réseau (314b) du réseau de téléphonie mobile (310) comprenant la sélection de la seconde tranche de réseau (314b) du réseau de téléphonie mobile (310) parmi une multitude de secondes tranches de réseau du réseau de téléphonie mobile (310),
le procédé (400) comprenant en outre l'étape de mise à disposition de l'entité de gestion de réseau (317) d'un logiciel d'instanciation de l'autre réseau de téléphonie mobile (320) par l'intermédiaire d'une interface (318) et le logiciel d'instanciation étant conçu pour mettre à disposition la seconde tranche de réseau (314b) sur le réseau de téléphonie mobile (310).

2. Procédé (400) selon la revendication 1, dans lequel l'étape (403) de mise à disposition de la seconde tranche de réseau (314b) du réseau de téléphonie mobile (310) a lieu en réaction à une étape d'inscription de l'appareil de communication mobile itinérant (301) dans le réseau de téléphonie mobile (310).

3. Procédé (400) selon la revendication 1, dans lequel l'entité de gestion de réseau exploite la première tranche de réseau (314a) et la seconde tranche de réseau (314b) parallèlement.

4. Procédé (400) selon une des revendications précédentes, dans lequel une station de base (303) fait partie de la première tranche de réseau (314a) et partie de la seconde tranche de réseau (314b) et la station de base est conçue pour communiquer en tant qu'élément de la première tranche de réseau (314a) sur la base d'une première technologie d'accès radio avec l'appareil de communication mobile et en tant qu'élément de la seconde tranche de réseau (314b) sur la base d'une seconde technologie d'accès radio avec l'appareil de communication mobile itinérant (301).

5. Procédé (400) selon une des revendications précédentes, dans lequel la seconde tranche de réseau (314b) du réseau de téléphonie mobile (310) reproduit au moins certaines fonctions de l'autre réseau de téléphonie mobile (320).

6. Procédé (400) selon la revendication 5, dans lequel l'étape de mise à disposition du logiciel d'instanciation a lieu en réaction à une étape d'inscription de l'appareil de communication mobile itinérant (301) dans le réseau de téléphonie mobile (310), ou sous forme d'un processus unique d'aménagement ou sous forme d'un processus d'actualisation répétitif.

7. Procédé (400) selon la revendication 1, dans lequel la sélection de la seconde tranche de réseau (314b) du réseau de téléphonie mobile (310) dans une multitude de secondes tranches de réseau du réseau de téléphonie mobile (310) est basée sur un profil de participant qui est en lien avec l'appareil de communication mobile itinérant (301).

8. Procédé (400) selon la revendication 7, dans lequel le procédé (400) comprend l'autre étape consistant à mettre à disposition du réseau de téléphonie mobile (310) de l'autre réseau de téléphonie mobile (320) le profil de participant en lien avec l'appareil de communication mobile itinérant (301).

9. Procédé (400) selon la revendication 8, dans lequel la mise à disposition du profil de participant en lien avec l'appareil de communication mobile itinérant (301) a lieu en réaction à une étape d'inscription de l'appareil de communication mobile itinérant (301) dans le réseau de téléphonie mobile (310), et à une étape de transfert d'un identifiant univoque de participant par le réseau de téléphonie mobile (310) à l'autre réseau de téléphonie mobile (320).

10. Entité de gestion de réseau (317) pour l'exploitation de tranches de réseau d'un réseau de téléphonie mobile (310), l'entité de gestion de réseau étant conçue pour mettre à disposition une première tranche de réseau (314a) du réseau de téléphonie mobile (310) pour permettre à un appareil de communication mobile disposant d'une souscription pour le réseau de téléphonie mobile (310) une communication par l'intermédiaire de la première tranche de réseau (314a) du réseau de téléphonie mobile (310),
**caractérisée en ce que**
l'entité de gestion du réseau est conçue pour mettre à disposition une seconde tranche de réseau (314b) du réseau de téléphonie mobile (310) pour permettre à un appareil de communication mobile itinérant (301) disposant d'une souscription pour un autre réseau de téléphonie mobile (320) une communication par l'intermédiaire de la seconde tranche de réseau (314b) du réseau de téléphonie mobile (310), l'entité de gestion de réseau étant conçue pour sélectionner la seconde tranche de réseau (314b) du réseau de téléphonie mobile (310) parmi une multitude de secondes tranches de réseau du réseau de téléphonie mobile (310) afin de mettre à disposition la seconde tranche de réseau (314b) du réseau de téléphonie mobile (310) et l'entité de gestion de réseau étant conçue pour, par l'intermédiaire d'une interface (318), se voir mettre à disposition un logiciel d'instanciation par l'autre réseau de téléphonie mobile (320), le logiciel d'instanciation étant conçu pour mettre à disposition la seconde tranche de réseau (314b) sur le réseau de téléphonie mobile (310).

11. Entité de gestion de réseau (317) selon la revendication 10, dans laquelle l'entité de gestion de réseau (317) est en outre conçue pour mettre à disposition la seconde tranche de réseau (314b) du réseau de téléphonie mobile (310) en réaction à une inscription de l'appareil de communication mobile itinérant (301) dans le réseau de téléphonie mobile (310).

12. Entité de gestion de réseau (317) selon la revendication 10 ou 11, dans laquelle la seconde tranche de réseau (314b) du réseau de téléphonie mobile (310) reproduit au moins certaines fonctions de l'autre réseau de téléphonie mobile (320).

13. Entité de gestion de réseau (317) selon une des revendications 10 à 12, dans laquelle l'entité de gestion de réseau (317) réalisée sous forme d'un orchestrateur SDN (317), SDN signifiant Software Defined Networking (réseau défini par logiciel).
